# EUROPÄISCHE PATENTSCHRIFT

(11) **EP 1 060 827 B1**
(45) Veröffentlichungstag und Bekanntmachung des Hinweises auf die Patenterteilung: **30.07.2003**
(21) Anmeldenummer: 00111356.2
(22) Anmeldetag: 26.05.2000
(51) Int. Cl.: B23K 37/053, B23H 9/00, C25F 7/00

(54) **Verfahren und Vorrichtung zur Innenoberflächenbehandlung von metallischen Rohren**
Method and apparatus for treating the interior of metallic tubes
Méthode et appareil pour le traitement des faces intérieures de tubes métalliques

(30) Priorität: 29.05.1999 DE 19924762
(43) Veröffentlichungstag der Anmeldung: 20.12.2000
(73) Patentinhaber: H. Butting GmbH & Co. KG, 29379 Wittingen-Knesebeck (DE)
(72) Erfinder: Schäfer, Karl, Dr., 38518 Gifhorn (DE); Hoffmann, Reinhold, 38518 Gifhorn (DE)
(74) Vertreter: Gramm, Werner, Prof. Dipl.-Ing.

(56) Entgegenhaltungen:
- WO-A-91/06388
- US-A- 3 570 109
- US-A- 4 159 072

## Beschreibung

Die Erfindung betrifft ein Verfahren zur Behandlung der Innenoberfläche metallischer Rohre sowie eine Vorrichtung zur Durchführung dieses Verfahrens.

Eines der wichtigsten Merkmale nichtrostender, hochlegierter CrNi-Stähle ist eine gute Beständigkeit gegenüber aggressiven Medien. Für die Korrosionsbeständigkeit dieser Werkstoffe ist der Aufbau einer sogenannten Passivschicht von entscheidender Bedeutung. Ein ungehinderter Aufbau dieser nur wenige Atomlagen dicken Schicht aus Chromoxid bzw. Chromhydroxid kann nur auf einer reinen Oberfläche stattfinden. Zunderschichten, Anlauffarben und Schlackenreste, die insbesondere beim Schweißen entstehen, stören den Aufbau der Passivschicht und senken die Korrosionsbeständigkeit. Die Entstehung dieser Art von Fremdablagerungen muß entweder vermieden oder beseitig werden. Durch den Einsatz geeigneter Schutzgase beim Schweißen lassen sich insbesondere unter Baustellenbedingungen die störenden dünnen Oxidschichten nicht immer sicher vermeiden, so dass nachfolgende Bearbeitungsschritte erforderlich werden.

Das Beizen von Bauteilen aus nichtrostenden Stählen in Mineralsäuregemischen stellt ein anerkanntes Verfahren zur Reinigung von Stahloberflächen und Gewährleistung der Korrosionsbeständigkeit dar. Bei der Halbzeugherstellung erfolgt die Beizbehandlung am Ende des Fertigungsprozesses in stationären Anlagen (Beizlinien, Vollbadheizung). Die hier erzielte Beizqualität ist jedoch aufgrund des aufwendigen Prozesses unter Baustellenbedingungen nicht erreichbar.

Die vorstehend genannten Anlagen stehen aber bei der Montage von Edelstahlrohren nicht zur Verfügung. Es besteht aber gerade im Wurzelbereich der Baustellenrundnähte aufgrund unvermeidbarer Schweißanlauffarben hoher Beizbedarf.

Die DE 36 25 862 A1 offenbart ein Verfahren zur Behandlung der Oberfläche der Austauscherrohre eines Dampferzeugers. Hier wird in den von der zu behandelnden Wandungsfläche umschlossenen Abschnitt des Rohres eine Elektrode eingebracht. Anschließend wird der genannte Rohrabschnitt beidseitig der zu behandelnden Wandungsfläche mit Hilfe zweier dehnbarer Dichtungen flüssigkeitsund gasdicht abgeschlossen. Dabei ist die Elektrode derart positioniert, dass die zu behandelnde Zone des Rohres zwischen den dehnbaren Dichtungen liegt. Die Dichtungen werden mittels eines kleinen Rohres über Kanäle unter Druck gesetzt und legen sich dadurch gegen die Innenwand des Rohres an. Die sich dann anschließende Behandlung kann aus einer Reinigung des Rohres oder aber aus einem Niederschlag bzw. einer Ablagerung einer Schicht auf der inneren Rohroberfläche bestehen. Im Fall einer Reinigung handelt es sich um einen sauren Elektrolyten, der injiziert wird und dann in dem zwischen der Elektrode und der Rohrinnenwandung definierten ringförmigen Raum zirkuliert. Zwischen dem Rohr und der Elektrode wird dann eine elektrische Spannung angelegt; nach Abschluss des elektrolytischen Prozesses wird der Elektrolyt entleert und die zu behandelnde Zone mit entmineralisiertem Wasser gespült.

DE-A-3 625 862 offenbart dabei eine Vorrichtung mit folgenden Merkmalen:
- die vorrichtung weist zwei in einem zumindest der axialen Breite der zu behandelnden Wandungsfläche entsprechenden axialen Abstand voneinander angeordnete Stirnwandungen auf;
- die Stirnwandungen sind jeweils mit einer radial äußeren Ringdichtung bestückt, die durch eine von außen steuerbare Spanneinrichtung flüssigkeits- und gasdicht an die Hohlraum-Innenwandung anpressbar sind;
- zwischen den Stirnwandungen liegt ein elektrischer Leiter der einen nach außen geführten Stromanschluss aufweist;
- in einer zwischen den beiden Stirnwandungen (3) eingeschlossenen, von der zu behandelnden Wandungsfläche (la) umschlossenen Reaktionskammer mündet eine Einspeisungsleitung für ein Schutzgas und/oder einen Elektrolyten aus;
- aus dieser Reaktionskammer ist eine Rücklaufleitung nach außen geführt.

Mit diesem vorbekannten Verfahren sollen eine einfache Entrostung, ein Abtrag bzw. ein Abbeizen der inneren Rohroberfläche oder aber ein Schutz des Rohres gegen Korrosion ohne Modifikation des metallurgischen und mechanischen Zustandes des Rohres erfolgen.

Ein vergleichbares Verfahren ist in der US 2,764,540 offenbart. Die DE 1 496 757 A offenbart ein Werkzeug zum elektrolytischen Glätten der Innenfläche von metallischen Rohren. Diese Vorrichtung weist u.a. eine Dichtung auf, deren Durchmesser durch eine Muffe vergrößert oder vermindert werden kann, so dass die Dichtung an die Rohrwandung anpressbar ist.

US-A-3 570 109 offenbart ein verfahren und eine vorrichtung zum Schweißen von zwei Rohren mit einem gasdichten Abschluß der Innenoberfläche der zwei zu schweißenden Rohre. Mittels einer Saugpumpe wind Schutzgas von dem an der Außenseite schweißenden Brenner ins Hohlraum gesaugt.

Der vorstehende Stand der Technik befasst sich vorwiegend mit der Reinigung von Rohrleitungsinnenoberflächen, mit der Auftragung einer metallischen Schicht und/oder mit dem Glätten der Oberfläche. Demgegenüber liegt der Erfindung die Aufgabe zugrunde, ein Verfahren sowie eine Vorrichtung zu entwickeln mit denen sich eine dauerhaft korrosionsbeständige Rohrverbindungsschweißnaht herstellen lässt.

Diese Aufgabe wird hinsichtlich des Verfahrens mit den Verfahrensschritten gemäß Anspruch 1 gelöst, während die Aufgabe vorrichtungsmäßig gelöst wird mit den Merkmalen des Anspruchs 2.

Die erfindungsgemäße Vorrichtung stellt daher einen kombinierten Formier- und Beizmolch dar, der die Funktion in einer Formierkammer beim Rundnahtschweißen kombiniert mit dem elektrolytischen Beizen von von außen nicht zugänglichen Edelstahloberflächen. Dabei handelt es sich nicht nur um die Reinigung einer formierten Schweißnaht bzw. der dieser Schweißnaht unmittelbar benachbarten Randbereiche, sondern auch um das Reinigen örtlich begrenzter Innenoberflächen von Anlauffarben, die sich nicht nur beim Schweißen, sondern z. B. auch beim Richten ergeben können. Auch die Beseitigung von Rost ist durch Einsatz des erfindungsgemäßen Molches möglich.

Beim elektrolytischen Beizen wird die chemische Wirkung der Beizlösung durch elektrischen Strom unterstützt. Dabei hängt das Beizergebnis u.a. von der Zusammensetzung des Elektrolyten, von der Stromdichte und -ausbeute, von der Temperatur der Beizlösung, den strömungstechnischen Bedingungen sowie der Leitfähigkeit ab. Die Vorteile des elektrolytischen Beizverfahrens gegenüber einer herkömmlichen Beize liegen insbesondere in der Verkürzung der Beizzeit, bei der Verwendung saurer Elektrolyten in der geringeren Säurekonzentration, in einer besseren Oberflächenbeschaffenheit sowie in der Anwendung des Verfahrens bei sonst nur sehr schwer beizbaren, legierten Werkstoffen.

Die erfindungsgemäße Vorrichtung weist eine besonders kompakte Bauform auf.

In der Zeichnung ist eine als Beispiel dienende Ausführungsform der Erfindung dargestellt. Es zeigen:
- **Figur 1**: einen Längsschnitt durch einen Formier- und Beizmolch und
- **Figur 2**: einen Querschnitt gemäß der Linie A/A in Figur 1.

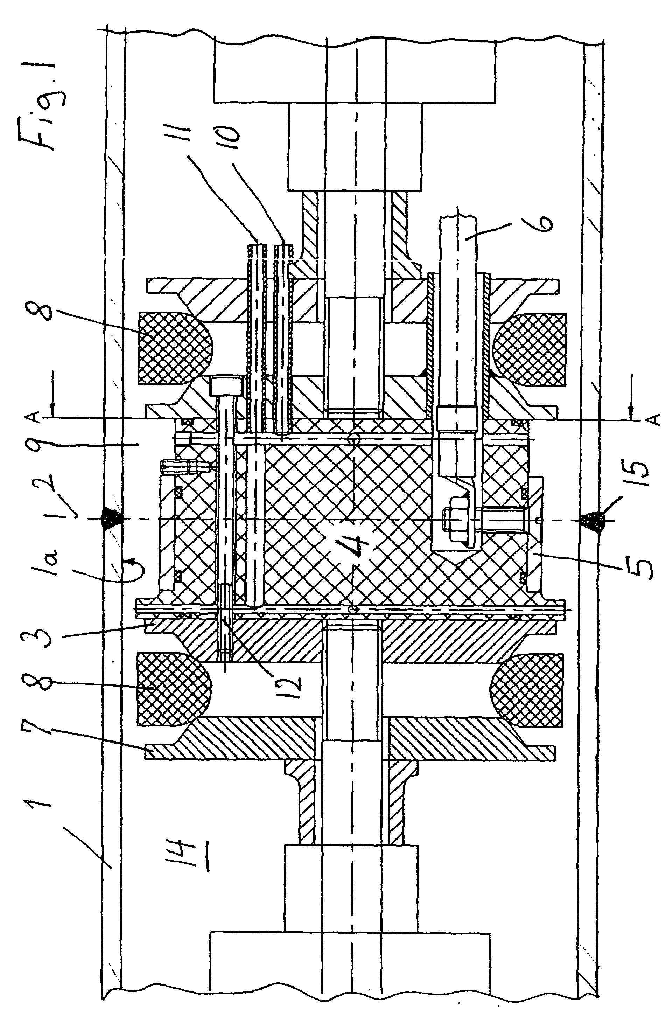

Figur 1 zeigt einen in ein Edelstahlrohr 1 eingesteuerten, über einen Rohrstoß 2 positionierten Molch. Letzterer weist zwei in einem zumindest der axialen Breite der zu behandelnden Wandungsfläche la entsprechenden axialen Abstand voneinander angeordnete Stirnwandungen 3 auf, die zwischen sich einen Molch-Distanzkörper 4 kleineren Durchmessers tragen, auf dessen Mantelfläche ein ringförmiger elektrischer Leiter 5 befestigt ist, der einen elektrischen Gegenpol darstellt und einen nach außen geführten Stromanschluß 6 aufweist.

In dem dargestellten Ausführungsbeispiel bildet jede Stirnwandung 3 die axial innen liegende Spannscheibe eines konischen Spannscheibenpaares, dessen äußere Spannscheibe 7 von außen über eine nicht näher dargestellte Verstelleinrichtung axial verschiebbar ist. In jedem der beiden konischen Spannscheibenpaare 3, 7 ist eine äußere Ringdichtung 8 angeordnet, die bei axialer Verspannung der äußeren Spannscheibe 7 gegen die innere Stirnwandung 3 radial nach außen, beidseitig von der zu behandelnden Wandungsfläche la flüssigkeits- und gasdicht an die Rohrinnenwandung anpressbar ist. Dadurch wird eine zwischen den beiden Stirnwandungen 3 eingeschlossene, von der zu behandelnden Wandungsfläche la umschlossene ringförmige Reaktionskammer 9 gebildet.

Figur 1 lässt erkennen, dass durch das rechts dargestellte Spannscheibenpaar 3, 7 sowie durch den Molch-Distanzkörper 4 eine in die Reaktionskammer 9 einmündende Einspeisungsleitung 10 für ein Schutzgas und/oder einen Elektrolyten sowie eine an die Reaktionskammer 9 angeschlossene Rücklaufleitung 11 geführt sind.

Die beiden innen liegenden, jeweils eine Stirnwandung 3 bildenden Spannscheiben sind zusammen mit dem zwischen ihnen eingeschlossenen Molch-Distanzkörper 4 über Schraubbolzen 12 gegeneinander verspannt.

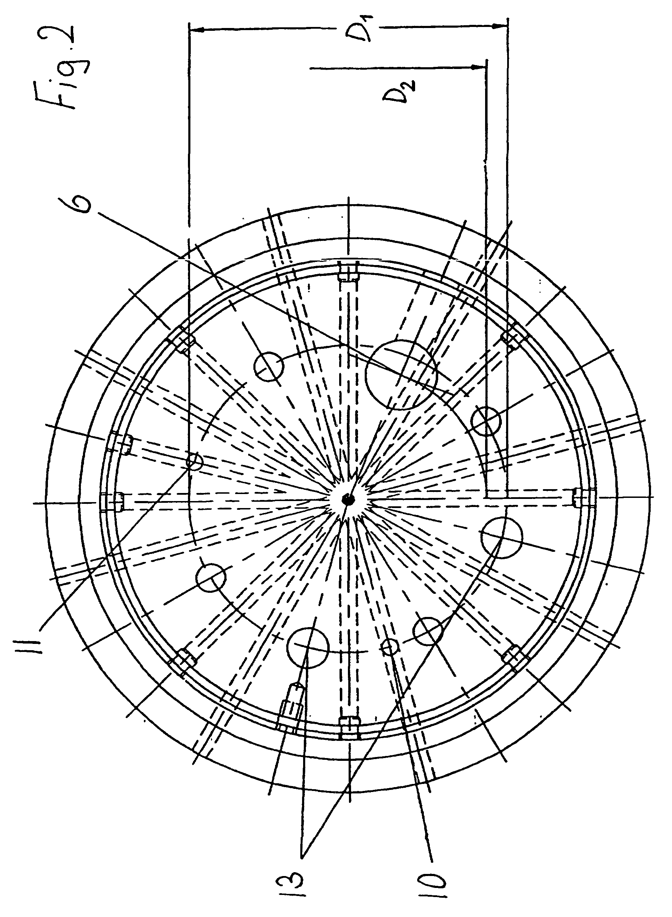

Figur 2 lässt erkennen, dass auf einem Kreis mit dem Durchmesser D₁ die den Vorlauf bildende Einspeisungsleitung 10, die Rücklaufleitung 11 sowie Pneumatikanschlüsse 13 liegen, die eine Luftspülung der Reaktionskammer 9 ermöglichen. Auf einem Kreis mit dem Durchmesser D₂ ist der Stromanschluss 6 für die ringförmige Kathode 5 angeordnet.

Der in Figur 1 dargestellte Molch lässt sich mit jeweils geöffneten Spannscheiben 3, 7 in einen von außen nur schwer zugänglichen Hohlraum 14 eines Werkstückes, z.B. eines Edelstahlrohres 1 einsteuern und über den Rohrstoß 2 positionieren. Durch eine von außen betätigte Verstellvorrichtung werden dann die beiden äußeren Spannscheiben 7 axial gegen die ihnen zugeordnete Stirnwandung 3 verspannt und drücken dadurch die als Spannelement ausgebildete Ringdichtung 8 flüssigkeits- und gasfest gegen die Innenwandung des Hohlraumes 14. Soll nun in einem ersten Arbeitsschritt ein Formieren der Schweißstelle beim Heften und Schweißen der Rundnaht erfolgen, wird die Reaktionskammer 9 zuerst mit einem dem Schweißprozeß angepassten Schutzgas geflutet.

Nach Fertigstellung der Rundnaht 15 und nach einer Entlüftung der Reaktionskammer 9 wird letztere mit einem Elektrolyten geflutet, nachdem an die ringförmige Kathode 5 und die als Anode dienende Werkstückoberfläche eine Spannung angelegt wurde. Durch den zwischen Anode und Kathode gebrachten Elektrolyten fließt nun ein Strom, der auf elektrochemischem Wege die Beseitigung von unerwünschten, die Korrosionsbeständigkeit negativ beeinflussenden Oxidschichten bewirkt.

## Patentansprüche

1. Verfahren zur Behandlung der Innenoberfläche metallischer Rohre, mit folgenden Verfahrensschritten:
- Die Behandlung erfolgt im Bereich eines Rohrstoßes (2) zwischen über Rundschweißnähte (15) miteinander zu verschweißenden Rohren aus nichtrostendem metallischen Werkstoff (1);
- nach einem Heft- und Schweißvorgang im Außenbereich des Rohrstoßes (2) erfolgt ein flüssigkeits- und gasdichter Abschluss des von der zu behandelnden Wandungsfläche (1a) umschlossenen Abschnittes des Hohlraumes (14);
- daraufhin wird dieser Hohlraumabschnitt zum Formieren der Schweißstelle mit einem dem Schweißprozess angepassten Schutzgas geflutet;
- daraufhin werden die zwei Rohre mit einer Rundschweißnaht (15) miteinander verschweißt;
- nach Fertigstellung der Rundschweißnaht (15) wird der Hohlraumabschnitt entlüftet;
- nach der Entlüftung wird in den Hohlraumabschnitt, in den zuvor ein elektrischer Leiter (5) eingebracht wurde, ein Elektrolyt eingeleitet;
- zwischen der Wandungsfläche (la) und dem genannten elektrischen Leiter (5) wird eine elektrische Spannung angelegt;
- nach Abschluss des dadurch ausgelösten elektrochemischen Beizprozesses im Wurzelbereich der Rundschweißnaht (15) wird der den Reaktionsraum bildende Hohlraumabschnitt mit einer Reinigungsflüssigkeit, z. B. Wasser gespült.

2. Vorrichtung zur Durchführung von einigen Schritten des Verfahrens nach Anspruch 1, mit folgenden Merkmalen:
- Die Vorrichtung ist in Form eines in den Werkstück-Hohlraum (14) einsteuerbaren Molches ausgebildet;
- der Molch weist zwei in einem bei der Verwendung zumindest der axialen Breite der zu behandelnden Wandungsfläche (1a) entsprechenden axialen Abstand voneinander angeordnete Stirnwandungen (3) auf;
- die Stirnwandungen (3) sind jeweils mit einer radial äußeren Ringdichtung (8) bestückt, die durch eine von außen steuerbare Spanneinrichtung flüssigkeits- und gasdicht an die Hohlraum-Innenwandung anpressbar sind;
- die Ringdichtung (8) ist ein zwischen konischen Spannscheiben (3, 7) angeordnetes, durch deren axiale Verspannung beaufschlagbares Spannelement;
- die jeweils innen liegenden Spannscheiben bilden die Stirnwandungen (3) des Molches und tragen zwischen sich einen Molch-Distanzkörper (4) kleineren Durchmessers, auf dessen Mantelfläche ein ringförmiger elektrischer Leiter (5) befestigt ist, der einen nach außen geführten Stromanschluss (6) aufweist;
- in einer zwischen den beiden Stirnwandungen (3) eingeschlossenen, von der zu behandelnden Wandungsfläche (1a) umschlossenen Reaktionskammer (9) mündet eine Einspeisungsleitung (10) für ein Schutzgas und/oder einen Elektrolyten aus;
- aus dieser Reaktionskammer (9) ist eine Rücklaufleitung (11) nach außen geführt.

## Claims

1. Process for treating the inner surface of metallic pipes, comprising the following process steps:
- the treatment takes place in the region of an abutting pipe join (2) between pipes which are made from stainless metallic material (1) and are to be welded to one another by means of circular weld seams (15);
- after a tacking and welding operation in the outer region of the abutting pipe join (2), that section of the cavity (14) which is surrounded by the wall surface (1a) which is to be treated is closed off in a liquid-tight and gas-tight manner;
- then, in order for the welding area to be formed, this cavity section is flooded with a shielding gas which is matched to the welding process;
- then, the two tubes are welded together by a circular weld seam (15);
- after the circular weld seam (15) has been completed, the cavity section is vented;
- after the venting, an electrolyte is introduced into the cavity section, into which an electrical conductor (5) has previously been introduced;
- an electric voltage is applied between the wall surface (1a) and the said electrical conductor (5);
- after the electrochemical pickling process which is thereby initiated in the root region of the circular weld seam (15) has been completed, the cavity section which forms the reaction space is flushed with a cleaning liquid, e.g. water.

2. Device for carrying out some steps of the process according to Claim 1, having the following features:
- the device is designed in the form of an intelligent pig which can be guided into the workpiece cavity (14);
- the intelligent pig has two end walls (3) which are arranged at an axial distance from one another which in use corresponds to at least the axial width of the wall surface (1a) which is to be treated;
- the end walls (3) are each fitted with a radially outer annular seal (8), which can be pressed onto the cavity inner wall in a liquid-tight and gas-tight manner by a clamping device which can be controlled from the outside;
- the annular seal (8) is a clamping element which is arranged between conical clamping discs (3, 7) and can be acted on by the axial bracing of these discs;
- in each case the inner clamping discs form the end walls (3) of the intelligent pig and between them bear an intelligent pig spacer (4) of smaller diameter, to the lateral surface of which an annular electrical conductor (5), which has a power connection (6) leading to the outside, is secured;
- a feedline (10) for a shielding gas and/or an electrolyte opens out in a reaction chamber (9) which is enclosed between the two end walls (3) and is surrounded by the wall surface (1a) which is to be treated;
- a return line (11) leads out of this reaction chamber (9) to the outside.

## Revendications

1. Procédé pour le traitement de la surface intérieure de tubes métalliques, comprenant les étapes suivantes :
- le traitement est effectué dans la zone d'un aboutement tubulaire (2) entre des tubes en matière métallique inoxydable (1) à souder ensemble par l'intermédiaire de cordons de soudure ronds (15);
- après un processus de liaison et de soudure dans la zone extérieure de l'aboutement tubulaire (2), on ferme de manière étanche aux liquides et aux gaz, le tronçon de la cavité (14) entouré par la face de paroi à traiter (1a);
- ensuite, on remplit de gaz protecteur adapté au processus de soudage ce tronçon de la cavité pour le formage de l'emplacement de soudage;
- les deux tubes sont ensuite soudés l'un avec l'autre avec un cordon de soudure rond (15);
- on ventile le tronçon de la cavité après achèvement du cordon de soudure rond (15);
- après la ventilation, on introduit un électrolyte dans le tronçon de la cavité, dans lequel on a préalablement introduit un conducteur électrique (5);
- on applique une tension électrique entre la surface de paroi (1a) et le conducteur électrique précité (5);
- après terminaison du processus d'attaque électrochimique ainsi déclenché dans la zone de la racine du cordon de soudure rond (15), on rince avec un liquide de nettoyage, par exemple de l'eau, le tronçon de cavité constituant la chambre de réaction.

2. Dispositif pour la mise en oeuvre de certaines étapes du procédé selon la revendication 1, comportant les particularités suivantes :
- le dispositif est sous la forme d'un écouvillon que l'on peut guider dans la cavité de la pièce (14) ;
- l'écouvillon présente deux parois d'extrémité (3) agencées à une distance axiale l'une de l'autre correspondant en utilisation au moins à la largeur axiale de la surface de la paroi (1a) à traiter;
- les parois d'extrémité (3) sont équipées chacune d'une étanchéité annulaire (8) radialement extérieure, qui peut être appliquée de façon étanche aux fluides et aux gaz contre la paroi intérieure de la cavité par un dispositif de contrainte pilotable de l'extérieur;
- l'étanchéité annulaire (8) est un élément de contrainte disposé entre disques de contrainte coniques (3, 7), qui peut être sollicité par mise sous contrainte axiale de ceux-ci ;
- les disques de contrainte intérieurs respectifs constituent les parois d'extrémité (3) de l'écouvillon et portent entre eux une entretoise d'écouvillon (4) de plus petit diamètre, sur la surface périphérique de laquelle est fixé un conducteur électrique annulaire (5), qui présente un raccordement électrique (6) allant vers l'extérieur ;
- une conduite d'alimentation (10) pour un gaz protecteur et/ou un électrolyte débouche dans une chambre de réaction (9) enfermée entre les deux parois d'extrémité (3), fermée périphériquement par la face de paroi (la) à traiter;
- une conduite de retour (11) va de cette chambre de réaction (9) vers l'extérieur.
